# EUROPEAN PATENT APPLICATION

(11) **EP 4 772 908 A1**
(43) Date of publication of application: **08.07.2026**
(21) Application number: 25224070.0
(22) Date of filing: 16.12.2025
(51) Int. Cl.: G01S 13/86, G01S 13/931, G01S 17/86, G01S 17/931, B60R 1/00, B60R 1/26, B60R 1/12, B60D 1/00

(54) **TRAILER SENSING SYSTEM WITH RADAR**

(30) Priority: 02.01.2025 US 202519008191
(71) Applicant: Stoneridge Electronics AB, 16903 Solna (SE)
(72) Inventor: MURTHY, Banuprakash, Novi, 48374 (US); MATTMULLER, Huimin, Oro Valley, 85755 (US); KIRWAN, John, Troy, 48084 (US)
(74) Representative: Marks & Clerk LLP

(57) **Abstract**

A trailer monitoring system includes a range sensor facing a rear direction and a camera monitor system, which includes a first mirror replacement assembly having a housing supporting a rear facing camera. One or more controllers are in communication with the range sensor, with the one or more controllers identifying an existence of a trailer surface based on a reading from the range sensor. In accordance with a detection of the trailer surface, the one or more controllers activate the camera monitor system for trailer monitoring.

## Description

### TECHNICAL FIELD

This disclosure relates to a trailer sensing system comprising a camera monitor system (CMS) for use in a commercial truck, and more particularly to a trailer sensing system that utilizes radar to detect a presence of a trailer to activate the CMS for trailer monitoring purposes.

### BACKGROUND

Mirror replacement systems, and camera systems for supplementing mirror views, are utilized in commercial vehicles to enhance the ability of a vehicle operator to see a surrounding environment. Camera monitor systems (CMS) utilize one or more cameras to provide an enhanced field of view to a vehicle operator. In some examples, the mirror replacement systems cover a larger field of view than a conventional mirror, or include views that are not fully obtainable via a conventional mirror.

In addition to mirror replacement, the images provided via the cameras in the CMS can be utilized to detect aspects of the environment and aspects of the vehicle in an image-processing-based detection process. Among the aspects of the vehicle that can be detected are trailer properties. The trailer properties can then be utilized for any number of systems including attentive driving detection, automated driving features, semi-automated driver assist features, jackknife warnings, and any similar elements.

Accurate detection of trailer properties using image-processing-based perception can be one important feature of the tractor-trailer systems described above. However, the image-processing-based perception is computationally intensive. Operating the image-based-perception to detect trailer properties when no trailer is attached can result in wasted processing power that could be utilized for other purposes within the camera monitoring system.

### SUMMARY OF THE INVENTION

In one exemplary embodiment, a trailer monitoring system includes: a range sensor facing a rear direction; a camera monitor system including a first mirror replacement assembly including a housing supporting a rear facing camera; and one or more controllers in communication with the range sensor, the one or more controllers identifying an existence of a trailer surface based on a reading from the range sensor, and wherein in accordance with a detection of the trailer surface, the one or more controllers activate the camera monitor system for trailer monitoring.

In another example of any described system, the range sensor may comprise a time-of-flight sensor.

In another example of any described system, the time-of-flight sensor may include a radar sensor.

In another example of any described system, the time-of-flight sensor may include a lidar range sensor.

In another example of any described system, the range sensor may be supported within the housing of the camera monitor system. The range sensor may cover a field of view for at least class IV.

In another example of any described system, the camera monitor system may include a second mirror replacement assembly including a second housing supporting a second rear facing camera. The second mirror replacement assembly may support a second range sensor.

In another example of any described system, the first mirror replacement assembly may be disposed in a first camera wing of a commercial vehicle, wherein a trailer is attached to the commercial vehicle.

In another example of any described system, the second mirror replacement assembly may be disposed in a second camera wing of the commercial vehicle.

In another example of any described system, the first mirror replacement assembly may be disposed on a driver side of the commercial vehicle. The second mirror replacement assembly may be disposed on a passenger side of the commercial vehicle.

In another example of any described system, the one or more controllers may comprise a processor and a memory, the memory storing instructions for identifying the trailer surface via the range sensor, the processor processing the instructions to identify a presence of a trailer associated with the commercial vehicle based on readings from the range sensor. The one or more controllers may communicate trailer detection information to a display or other output device.

In another example of any described system, the camera monitor system may have a deactivated state and an activated state for trailer monitoring. In accordance with an identification of a trailer based on readings from the range sensor, the one or more controllers may automatically place the camera monitor system in the activated state.

In another example of any described system, the camera monitor system may be in the activated state only while the range sensor detects a presence of the trailer.

In another example of any described system, the one or more controllers may automatically return the camera monitor system to the deactivated state when the range sensor no longer detects the presence of the trailer.

In another example of any described system, the range sensor may be configured to sense an entire length of the trailer.

In one exemplary embodiment, a method for monitoring a presence of a trailer attached to a commercial vehicle for activation of a camera monitor system includes at least a first mirror replacement assembly having a housing supporting a rear facing camera, the method comprising: communicating readings from a rear facing range sensor to one or more controllers; the one or more controllers identifying a presence of a trailer surface based on the readings from the rear facing range sensor; and in accordance with a detection of the trailer surface, activating the camera monitor system for trailer monitoring.

In another example of any described method, the rear facing range sensor may be one of a radar sensor and a lidar sensor. The rear facing range sensor may be configured to sense an entire length of the trailer.

In another example of any described method, and the method may include supporting the rear facing range sensor within the housing of the first mirror replacement assembly. The rear facing range sensor may cover a field of view for at least class IV.

In another example of any described method, the camera monitor system may include a second mirror replacement assembly including a second housing supporting a second rear facing camera and supporting a second rear facing range sensor. The method may include: disposing the first mirror replacement assembly in a first camera wing of a commercial vehicle; and/or disposing the second mirror replacement assembly in a second camera wing of the commercial vehicle.

In another example of any described method, the camera monitor system may have a deactivated state and an activated state for trailer monitoring. In accordance with an identification of a trailer associated with the commercial vehicle based on identification of a trailer surface from the rear facing range sensor, the one or more controllers may automatically place the camera monitor system in the activated state.

In another example of any described method, the camera monitor system may be in the activated state for trailer monitoring only while the rear facing range sensor detects the presence of the trailer. The one or more controllers may automatically return the camera monitor system to the deactivated state for trailer monitoring when the rear facing range sensor no longer detects the presence of the trailer.

### BRIEF DESCRIPTION OF THE DRAWINGS

The disclosure can be further understood by reference to the following detailed description when considered in connection with the accompanying drawings wherein:
Figure 1 is a schematic front view of a commercial truck with a camera monitor system (CMS) used to provide at least narrow and wide fields of view alongside the vehicle (e.g., Class II and Class IV views).
Figure 2 is a schematic birds-eye view of the commercial truck of Figure 1 with a CMS providing, for example, Class II, Class IV, Class V, Class VI, and Class VIII views.
Figure 3 is a schematic top view of an example vehicle cabin interior.
Figure 4 is a perspective view of an example vehicle cabin interior.
Figure 5 is a schematic birds-eye view of the commercial truck of Figure 1 with radar providing, for example, Class II and Class IV detected areas.
Figure 6 is a schematic diagram showing ground coverage detected area and sensitivity using radar.
Figure 7 is a schematic diagram of a trailer sensing system using radar for detecting a presence of a trailer relative to a commercial vehicle.

The embodiments, examples and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### DETAILED DESCRIPTION

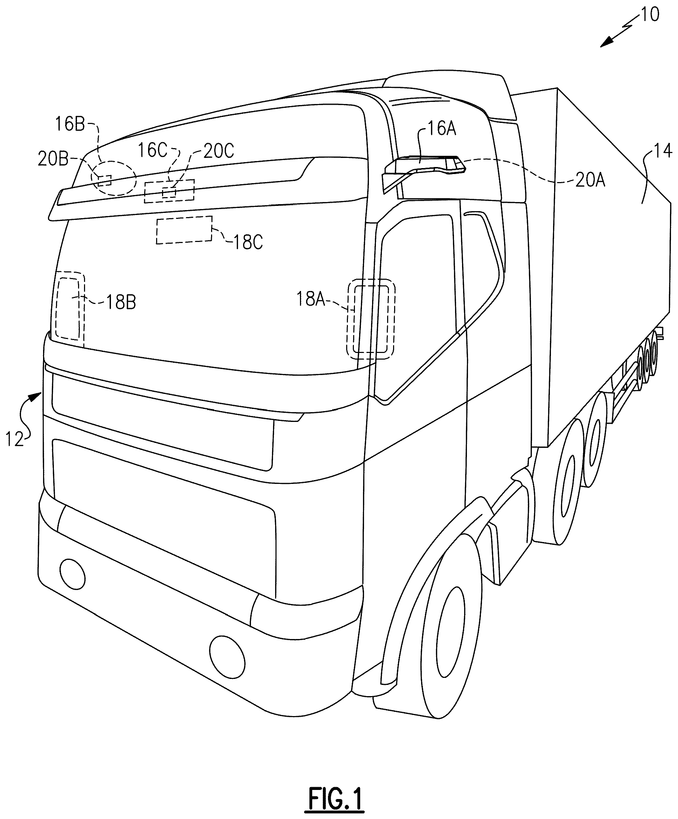

Schematic views of a commercial vehicle 10 are illustrated in Figures 1-4. The commercial vehicle 10 includes a vehicle cab or "tractor" 12 for pulling a trailer 14, where the trailer 14 articulates with respect to the tractor 12 during turns. Although the commercial vehicle 10 is depicted as a commercial truck with a single trailer in this disclosure, it is understood that other commercial vehicle configurations may be used (e.g., different types or quantities of trailers).

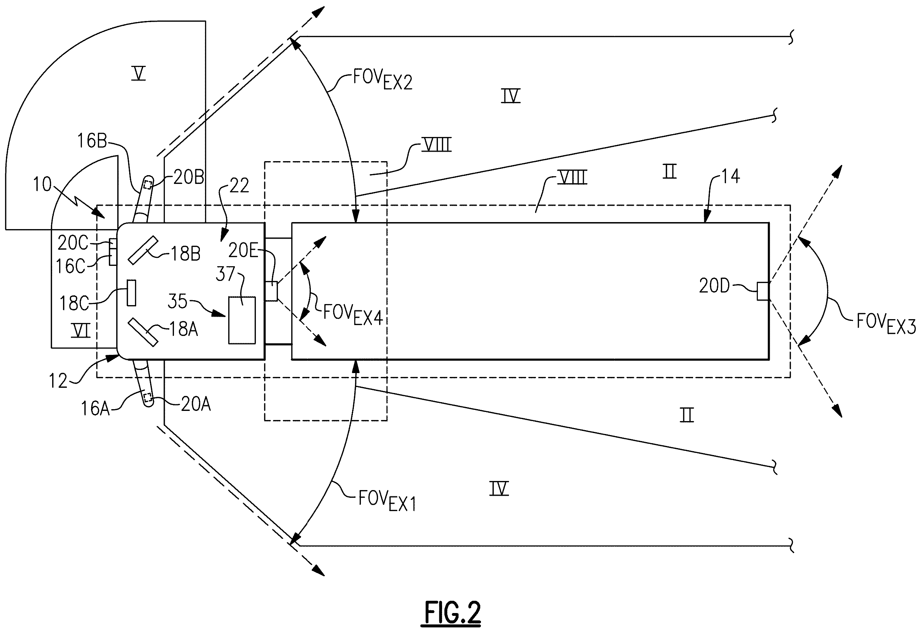

A pair of camera arms 16A-B include a respective base that is secured to, for example, the tractor 12. A pivoting arm is supported by the base and may articulate relative thereto. At least one rearward facing camera 20A-B is arranged respectively on or within the camera arms 16A-B. The exterior cameras 20A-B respectively provide an exterior field of view FOVEX1, FOVEX2 that each include at least one of Class II and Class IV views (Fig. 2), which are legally prescribed views in the commercial trucking industry.

The Class II view on a given side of the commercial vehicle 10 is a subset of the class IV view of the same side of the commercial vehicle 10. Multiple cameras also may be used in each camera arm 16A-B to provide these views, if desired. Class II (narrow) and Class IV (wide angle) views are defined in European R46 legislation, for example, and the United States and other countries may have similar driver visibility requirements for commercial trucks. Any reference to a "Class" view is not intended to be limiting, but is intended as an example of the type of view provided to a display from a particular camera. For example, certain views may be prescribed in SAE J3155 or other regulations.

The camera arms 16A-B may be mounted either at a roof-mount location over the cab door (as shown), or on a door-mounted bracket or station, for example. In implementations, the camera arms 16A-B may be utilized with a camera monitor system (CMS) 15. Each camera arm 16A-16B may also provide a housing that encloses electronics, e.g., one or more controllers, which are configured to provide various features of the CMS 15. If desired, the camera arms 16A-B may also include conventional mirrors integrated with the arms, although the CMS 15 may be used to entirely replace mirrors. In additional examples, each side can include multiple camera arms, with each arm housing one or more cameras and/or mirrors.

If video of Class V and/or Class VI views is also desired, a camera housing 16C and camera 20C may be arranged at or near the front of the commercial vehicle 10 to provide those views (Fig. 2). Generally, Class V covers a passenger side of the vehicle from a passenger vehicle cab corner aftward along a cab of the vehicle, and Class VI covers a passenger side of the vehicle from a passenger vehicle cab corner along a front of a cab of the vehicle.

A backup camera 20D may be provided which provides a field of view FOVEX3. The backup camera 20D may be mounted at a top/centerline of the trailer, at a bumper/bed level of the trailer, or at a top-corner of the back of the trailer, for example. Alternatively, or in addition to the rear trailer camera, a "fifth wheel camera" 20E may be provided that is mounted to a rear of the tractor 12 and that provides a field of view FOVEX4. The fifth wheel camera 20E may be mounted anywhere between the lateral plane of the fifth wheel fixture and the top/roof edge of the tractor, for example.

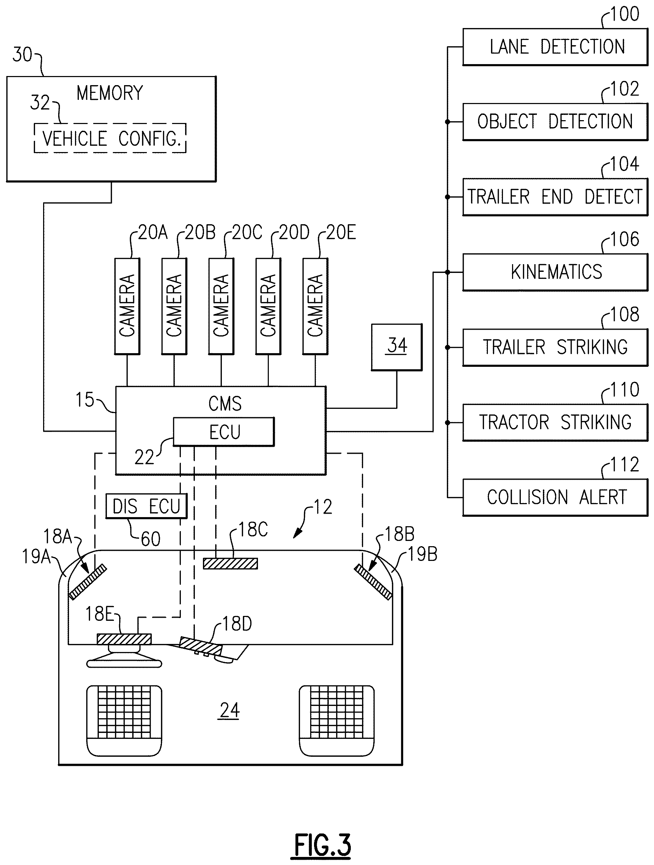

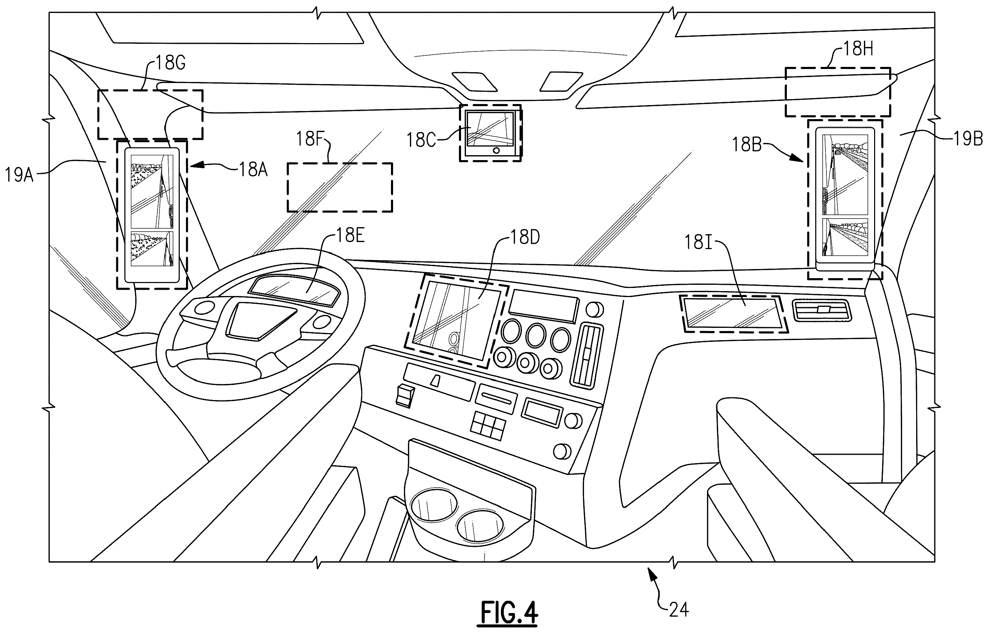

Figure 3 is a schematic top view of an example vehicle cabin interior 24, and Figure 4 is a perspective view of the vehicle cabin interior 24. Referring now to Figures 3-4 with continued reference to Figures 1-2, electronic displays 18A-E (e.g., which may be video displays, such as LCD displays) and cameras 20A-E are shown. The various electronic displays 18A-E and cameras 20A-E are part of the CMS 15, and therefore act as CMS displays and CMS cameras. As used herein, a "CMS camera" 20 is a camera configured to record images of an environment surrounding a commercial vehicle 10, and a "CMS display" 18 is an electronic display (e.g., an LCD) that is configured to image or display feeds from those cameras.

Figure 4 illustrates additional or different displays 18F, 18G, 18H, 18I that may be used to display images from the cameras 20A-E or other cameras. For example, display 18F provides a heads-up-display (HUD) projected in the region of the driver side windshield. Displays 18G, 18H may be provided respectively on the A-pillars 19A, 19B to provide additional views to those of the displays 18A, 18B. An additional display 18I may be provided on the passenger side. Fewer, more or different displays and/or configurations may be used.

The CMS 15 includes a CMS controller or electronic control unit (ECU) 22 that acts as a second controller and includes processing circuitry that supports operation of the CMS 15. The CMS ECU 22 is operatively connected to memory (which may include any one or combination of volatile memory elements (e.g., random access memory (RAM, such as DRAM, SRAM, SDRAM, VRAM, etc.)) and/or nonvolatile memory elements (e.g., ROM, hard drive, tape, CD-ROM, etc.). The processing circuitry may include one or more microprocessors, microcontrollers, application specific integrated circuits (ASICs), or the like.

The CMS displays 18A-B are arranged on each of the driver and passenger sides within the vehicle cab 12 on or near the A-pillars 19A-B to display Class II and Class IV views on its respective side of the commercial vehicle 10, which provide rear facing side views along the commercial vehicle 10 that are captured by the exterior cameras 20A-B.

As discussed above, if video of Class V and Class VI views are also desired, the camera housing 16C and camera 20C may be arranged at or near the front of the commercial vehicle 10 to provide those views (Fig. 2). In the example of Figure 3, additional displays 18C-E are provided. Display 18C is arranged in the vehicle cabin interior 24 near the top center of the windshield may be used to display the Class V and Class VI views, which are toward the front of the commercial vehicle 10, or a backup camera view (from camera 20D or 20E) to the driver. Display 18D is provided in a center console area of the vehicle cabin interior 24, generally located centrally in a bottom half of the vehicle cabin, and may be used for other purposes, such as navigation, infotainment, etc. (i.e., a secondary information display (SID)).

Display 18E may be part of an instrument cluster (i.e., a primary or driver information display (DIS)) located behind the steering wheel, for example. The DIS 18E includes a first controller 60 and is configured to the depict vehicle operating information, such as at least one of a vehicle speed (speedometer), an engine rotational speed (tachometer), fuel level, engine temperature, and gear position indicator (PRNDL). Other example vehicle operating information such, as odometer, trip odometer, fuel economy, vehicle and/or engine maintenance information, vehicle telltales (e.g., warning lights, malfunction lights, status lights (e.g., turn signals), etc. for tractor and/or trailer).

The first controller 60, e.g., the DIS controller and the second controller 22, e.g., the CMS controller, include domain controller functionality that authenticate and authorize requests from one another so that video from the CMS 15 can be communicated to the DIS 18E.

If video of Class VIII views is desired, camera housings can be disposed at the sides and rear of the commercial vehicle 10 to provide fields of view including some or all of the Class VIII zones of the commercial vehicle 10. In such examples, one of the displays 18C-E may include one or more frames displaying the Class VIII views. The displays 18A, 18B, 18C face a driver region 35 within the vehicle cabin interior 24 where an operator is seated on a driver seat 37.

In various examples, the ECU 22 is configured to include algorithm(s), equation(s) and/or decision manager(s) that receive input(s) from sensors (e.g., cameras 20A-20E, ultrasonic, LiDar, radar, etc.) and/or stored values, as schematically illustrated in Figure 3. Example modules include Lane Detection Module 100, Object Detection Module 102, Trailer End Detection Module 104, Kinematic Module 106, Trailer Striking Area Prediction Module 108, Tractor Striking Area Prediction Module 110, and Collision Alert Module 112. Example inputs include one or more sensors 34, such as a steering angle sensor, a vehicle speed sensor, gear position sensor, and/or other sensor data. Vehicle configuration information 32, which may be stored in memory 30, relates to vehicle characteristics (e.g., trailer length, axle position, trailer type/wheelbase, tractor configuration/wheelbase, hitch point location etc.), provided by the manufacturer, operator, and/or determined by one or more of the modules. During vehicle operation, the ECU 22 may communicate information to the driver, fleet operator, or others using an output (e.g., displays 18, speaker, etc.). Example operation and uses of these modules are disclosed in International Application No. PCT/US2023/083416 filed on December 11, 2023, entitled "CAMERA MONITOR SYSTEM WITH TRAILER CURB STRIKE ALERT AND TRAILER STRIKING AREA," which is incorporated herein by reference in its entirety.

The lane detection module 100 also uses image processing of the captured images to identify markings on the roadway, such as lane markers that visually divide adjacent lanes. One example algorithm is described in United States Publication No. US2023/117,719, entitled "CAMERA MIRROR SYSTEM DISPLAY FOR COMMERCIAL VEHICLES INCLUDING SYSTEM FOR IDENTIFYING ROAD MARKINGS", which is incorporated by reference in its entirely. In that publication, a lane detection module is described in which an object detection algorithm identifies a lane marking in a roadway by filtering a color of the lane marking from a surrounding portion of the captured image. Other techniques based upon deep learning technology or another computer vision method may be used, if desired.

The object detection module 102 includes one or more image processing algorithms configured to identify objects in the captured images. The algorithms may be used to identify VRU's (e.g., pedestrians or cyclists), attributes of the tractor 12 and/or trailer 14, other vehicles, signs, curbs, trees, buildings and/or other inanimate objects.

The trailer end detection module 104 is another image processing module that extracts one or more trailer features from the captured images to determine the location of the end of the trailer in 3D space. These extracted attributes can be used to detect objects such as tractor wheels, trailer edges and other features. Example wheel detection algorithm techniques are disclosed in United States Publication No. US2023/202,394 entitled "CAMERA MONITOR SYSTEM FOR COMMERCIAL VEHICLES INCLUDING WHEEL POSITION ESTIMATION", which is incorporated herein by reference in its entirety. Example trailer edge detection algorithm techniques are disclosed in United States Publication No. US2023/125,045 entitled "TRAILER END TRACKING IN CAMERA MONITORING SYSTEM", which is incorporated herein by reference in its entirety. Other techniques may be used, if desired.

In one example operation, the CMS 15 utilizes the kinematics module 106 to predict a striking zone of the trailer 14 during a turn operation and generates a two-dimensional overlay to digitally impose over at least one of the displayed Class II/IV images thereby showing the vehicle operator an expected striking zone of the trailer 14 and allowing the vehicle operator adjust the vehicle operations accordingly. The CMS 15 uses the received captured images from the cameras 20A, 20B, as well as any other cameras and vehicle operation data received from a general vehicle controller through a data connection, such as a CAN or LIN bus, to estimate a predicted position of the tractor and/or trailer side at each of multiple side positions and multiple points in time. These positions are converted to a geometric area encompassing all the positions. In this way, the shape and size of the geometric area is not fixed, but rather reflects an actual predicted striking area of the trailer.

In order to avoid accidental strikes, the striking area prediction system uses the vehicle data (e.g. steering angle, steering rate, trailer angle, vehicle speed, trailer wheelbase, tractor wheelbase, hitch point location, yaw rate and the like) to generate a predicted striking zone over time. The predicted striking zone is a prediction of the path the trailer will take over the course of the turn and is recalculated continuously as the turn progresses. The trailer striking area is also useful in a potential "curve cut" scenario when the vehicle 10 is traveling down a curved roadway. In a curvy road, it becomes more likely for the trailer end to cross the lane markers. indicating boundaries to adjacent lanes, creating a potentially dangerous situation.

The CMS 15 includes a Decision Manager or Collision Alert Module 112 that communicates with the modules 100-110 to evaluate the proximity between the predicted tractor and/or trailer paths (i.e., the tractor and trailer striking areas) and one or more objects (e.g., predicting an imminent curb strike, curve cut, object collision etc.). The decision manager considers the estimated time to the event, severity (what the object is), closing rate between objects, etc. and may provide an overlay and/or alert.

While various overlays and alerts may useful in increasing operator awareness and enhancing safety, it is desirable to more easily and proactively manage awareness of vehicle surroundings.

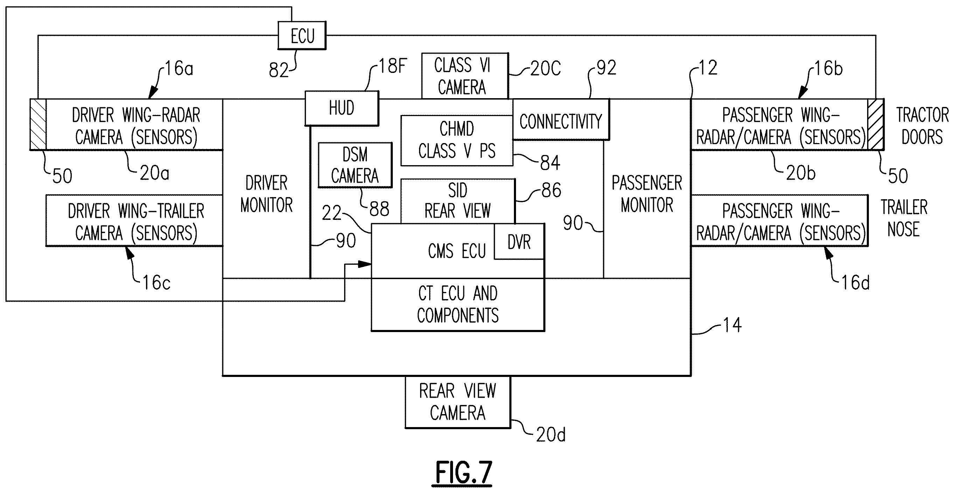

In implementations, also included in each of the camera arms 16a, 16b is a mirror replacement assembly that includes a range sensor 50 (Figure 7), such as a radar sensor, a lidar sensor, or any other time of flight sensor, and a corresponding camera 20a, 20b. The range sensor 50 and the camera 20a, 20b are rear facing, with field of views at least as large as the field of view provided by a convention rear facing mirror as seen by an occupant in the driver position. Each camera arm 16a, 16b includes an approximately identical mirror replacement assembly. As used herein, approximately identical mirror replacement assemblies refer to mirror replacement assemblies that have the same systems and functionality, while allowing for minor variations such as orientation and relative positioning that may be necessary to account for driver side/passenger side positioning or similar position related variations.

In the example of Figure 7, the system further includes a center high mounted display (CHMD) 84, e.g. display 18C (Figure 4), for Class V and a secondary information display (SID) 86 for a rear view. A DSM camera 88 may also be provided. The configuration shown in Figure 7 is just one example configuration, the wing camera/range sensors 50 can also be used in other configurations with different types of displays and monitors.

In implementations, the system may also include additional camera arms 16C, 16D, with each arm housing one or more cameras and/or mirrors. In the example shown in Figure 7, the additional camera arms 16C, 16D include trailer cameras/sensors that can provide information in addition to the information provided by the cameras 20a, 20b and associated range sensors 50.

The range sensor 50 emits waves of radio (radar) or light (lidar) that reflect off objects and back to the range sensor 50. The range sensor 50 measures the time of flight from emission to the wave being returned to the sensor. Based on this time of flight, the range sensor 50, or a connected controller, can detect the distance that an object/surface is from the range sensor 50. Due to the way in which the range sensor 50 operates, a distance to an object can be determined quickly, and with a high degree of accuracy, using the sensor signals and minimal calculations.

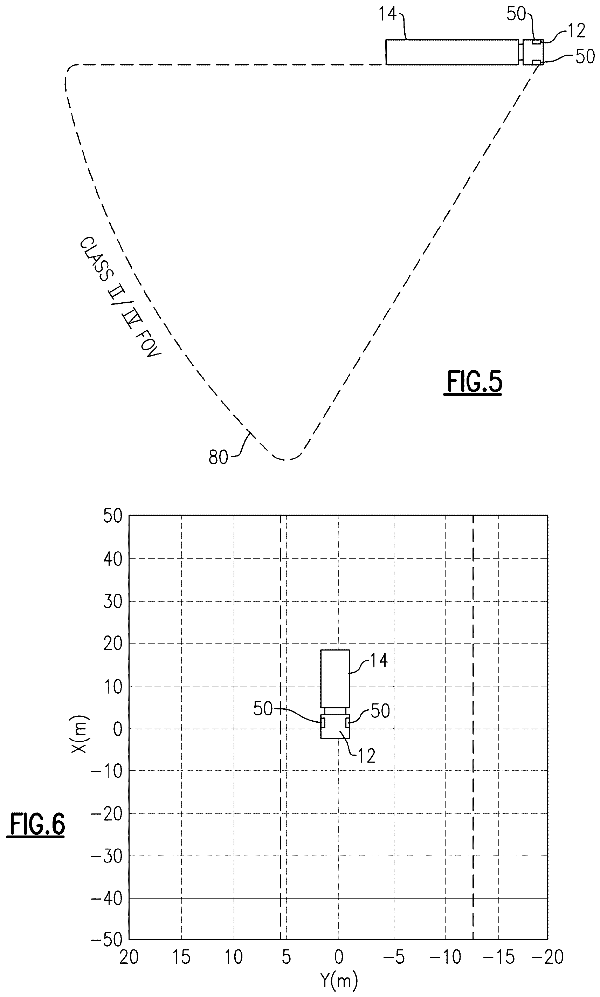

Figure 5 schematically illustrates a field of view (FOV) 80 generated by the range sensor 50 on a passenger side of the trailer 14. In implementations, the range sensor 50 on the driver side would have the same FOV. In the example shown, the field of view 80 covers areas for Class II and Class IV. In implementations, if the trailer 14 is positioned within the field of view 80, a surface of the trailer can be detected by the range sensor 50 along an entire length of the trailer 14. In one example, a commercial trailer length in the US is 53 feet, and the range sensor 50 is configured to sense a surface of the trailer that extends at least 53 feet. A distance from the trailer surface to the range sensor 50 can be determined relatively easily from the data generated by the range sensor 50 alone.

In implementations, co-located range sensors 50 will cover for Class II/IV areas on both sides of the trailer 14 and will exact coverage for the entire length of the trailer 14 on both sides.

Figure 6 depicts a schematic diagram showing a ground coverage detected area and sensitivity for the range sensor 50, e.g., radar. In this example, the blind spot detection (BSD) comprises a 180x90 FOV at a wing height of 2.8 meters. In the example shown, the ground coverage detected area covers 20 meters to either side of the tractor 12 and trailer 14, as well as covering 50 meters fore/aft from the sensor 50 on each side of the tractor 12 and trailer 14.

In implementations, one or more controllers 82 (Figure 7) are in communication with the range sensors 50 from each camera 20a, 20b. The one or more controllers 82 can be part of a separate and/or dedicated ECU unit, or may be incorporated or associated with other vehicle controllers such as the CMS ECU 22 or the DIS ECU 60, for example. The controller 82 is utilized to identify an existence of a trailer surface of a trailer 24 associated with a commercial vehicle 10 based on readings from the range sensor 50, and in accordance with a detection of the trailer surface, the controller 82 activates the camera monitoring system 15.

In implementations, the ECU controller 82 comprises a processor and a memory, where the memory stores instructions for identifying the trailer surface via the range sensor 50. The processor processes the instructions to identify a presence of the trailer 14 associated with the commercial vehicle 10 based on readings from the range sensor 50. For example, the ECU controller 82 is able to determine the distance to a surface using data generated by the range sensor 50. The ECU controller 82 can then perform an analysis to determine whether or not the detected surface is associated with the trailer 14. Those skilled in the art who have the benefit of this description will be able to determine the appropriate analysis that would be applied for these purposes.

In implementations, the controller 82 can communicate the trailer detection information to one or more displays/monitors 90 (Figure 7) or other output devices. The display 90 can comprise a separate display or can be associated with one or more of the displays as shown in Figure 4.

In implementations, the trailer detection information can also be communicated to a cloud or other remote location via a connectivity interface 92.

In implementations, the CMS 15 has a deactivated state and an activated state for trailer detection/monitoring purposes, and in accordance with an identification of the trailer 14 based on readings from the range sensor 50, the controller 82 automatically places the CMS 15 in the activated state for trailer monitoring purposes. In one example, the controller 82 communicates an activation signal to the CMS ECU 22 either wirelessly or through a wired connection interface, for example.

In implementations, the CMS 15 is in the activated state for trailer purposes only when the range sensor 50 detects the presence of the trailer 14.

For example, in one implementation, the trailer presence identification process starts when the commercial vehicle 10 is in a parked and ignition OFF condition. In this condition, the CMS 15 is also in the deactivated state. Once the ignition is in an ON condition, the range sensor 50 is activated to generate readings for objects/surfaces within the detection range of the range sensor 50. The controller 82 receives readings/data from the range sensor 50 and can then perform an analysis to determine whether or not the detected surface is associated with the trailer 14. Those skilled in the art who have the benefit of this description will be able to determine the analysis that would be applied for these purposes. Once the controller 82 positively identifies the presence of trailer 14, the CMS 15 is then automatically activated. If there is no detection of a trailer, the CMS 15 remains in the deactivated state.

In implementations, once the CMS 15 is in the activated state, the CMS 15 remains activated until there is no longer a trailer 14 associated with the vehicle 10. For example, if the vehicle 10 completes a route or delivery and the trailer 14 remains docked, the vehicle 10 can drive away from the trailer 14 either for separate parking purposes or for connection to another trailer. Once the range sensor 50 no longer detects the presence of the trailer 24, the controller 82 may automatically return the CMS 15 to the deactivated state for trailer purposes. In implementations, CMS may 15 remain active for other purposes.

The subject disclosure provides for co-located range sensors that provide information on objects, e.g., VRU/Non-VRU, as well as static reflections on the trailer to provide trailer presence detecting as a reliable solution at every startup, and which is accomplished with great accuracy.

Although an example embodiment has been disclosed, a worker of ordinary skill in this art would recognize that certain modifications would come within the scope of the claims. For that reason, the following claims should be studied to determine their true scope and content.

## Claims

1. A trailer monitoring system comprising:
a range sensor facing a rear direction;
a camera monitor system including a first mirror replacement assembly including a housing supporting a rear facing camera; and
one or more controllers in communication with the range sensor, the one or more controllers identifying an existence of a trailer surface based on a reading from the range sensor, and wherein in accordance with a detection of the trailer surface, the one or more controllers activate the camera monitor system for trailer monitoring.

2. The trailer monitoring system of claim 1, wherein the range sensor comprises a time-of-flight sensor.

3. The trailer monitoring system of claim 2, wherein the time-of-flight sensor includes at least one of a radar sensor and a lidar range sensor.

4. The trailer monitoring system of any preceding claim, wherein the range sensor is supported within the housing of the camera monitor system, and wherein the range sensor covers a field of view for at least class IV.

5. The trailer monitoring system of any preceding claim, wherein the first mirror replacement assembly is disposed in a first camera wing of a commercial vehicle, optionally wherein the first mirror replacement assembly is disposed on a driver side of the commercial vehicle.

6. The trailer monitoring system of any preceding claim, wherein the camera monitor system includes a second mirror replacement assembly including a second housing supporting a second rear facing camera and supporting a second range sensor, optionally wherein the second mirror replacement assembly is disposed in a second camera wing of the commercial vehicle, optionally wherein the second mirror replacement assembly is disposed on a passenger side of the commercial vehicle.

7. The trailer monitoring system of any preceding claim, wherein the one or more controllers comprise a processor and a memory, the memory storing instructions for identifying the trailer surface via the range sensor, the processor processing the instructions to identify a presence of a trailer associated with the commercial vehicle based on readings from the range sensor, and wherein the one or more controllers communicate trailer detection information to a display or other output device.

8. The trailer monitoring system of any preceding claim, wherein the camera monitor system has a deactivated state and an activated state for trailer monitoring, and wherein in accordance with an identification of a trailer based on readings from the range sensor, the one or more controllers automatically place the camera monitor system in the activated state.

9. The trailer monitoring system of claim 9, wherein the camera monitor system is in the activated state only while the range sensor detects a presence of the trailer, and/or wherein the one or more controllers automatically returns the camera monitor system to the deactivated state when the range sensor no longer detects the presence of the trailer.

10. The trailer monitoring system of any preceding claim, wherein the range sensor is configured to sense an entire length of the trailer.

11. A method for monitoring a presence of a trailer attached to a commercial vehicle for activation of a camera monitor system including at least a first mirror replacement assembly having a housing supporting a rear facing camera, the method comprising:
communicating readings from a rear facing range sensor to one or more controllers;
the one or more controllers identifying a presence of a trailer surface based on the readings from the rear facing range sensor; and
in accordance with a detection of the trailer surface, activating the camera monitor system for trailer monitoring.

12. The method of claim 11, wherein the rear facing range sensor includes at least one of a radar sensor and a lidar sensor, and wherein the rear facing range sensor is configured to sense an entire length of the trailer.

13. The method of claim 11 or 12, including supporting the rear facing range sensor within the housing of the first mirror replacement assembly, optionally wherein the rear facing range sensor covers a field of view for at least class IV.

14. The method of any one of claims 11 to 13, wherein the camera monitor system includes a second mirror replacement assembly including a second housing supporting a second rear facing camera and supporting a second rear facing range sensor, the method including:
disposing the first mirror replacement assembly in a first camera wing of a commercial vehicle; and
disposing the second mirror replacement assembly is disposed in a second camera wing of the commercial vehicle.

15. The method of any one of claims 11 to 14, wherein the camera monitor system has a deactivated state and an activated state for trailer monitoring, and wherein in accordance with an identification of a trailer associated with the commercial vehicle based on identification of a trailer surface from the rear facing range sensor, the one or more controllers automatically place the camera monitor system in the activated state, optionally wherein the camera monitor system is in the activated state for trailer monitoring only while the rear facing range sensor detects the presence of the trailer, optionally wherein the one or more controllers automatically returns the camera monitor system to the deactivated state for trailer monitoring when the rear facing range sensor no longer detects the presence of the trailer.
